# EUROPEAN PATENT APPLICATION

(11) **EP 4 779 830 A1**
(43) Date of publication of application: **22.07.2026**
(21) Application number: 25215915.7
(22) Date of filing: 14.11.2025
(51) Int. Cl.: H02J 1/002, H02J 1/02, H02J 3/007, H02J 3/01, H02J 4/20, H02J 4/25, H02J 9/06, H02M 1/00, H02M 1/42

(54) **VOLTAGE COMPENSATION SYSTEM AND UNINTERRUPTIBLE POWER SUPPLY**

(30) Priority: 15.01.2025 TW 114101570
(71) Applicant: Delta Electronics, Inc., Taoyuan City 33370 (TW)
(72) Inventor: Lin, Hung-Chieh, 32063 Taoyuan City (TW); Huang, Hung-Yu, 32063 Taoyuan City (TW); Hsieh, Yi-Ping, 32063 Taoyuan City (TW); Wang, Chiu-Feng, 32063 Taoyuan City (TW)
(74) Representative: Uexküll & Stolberg

(57) **Abstract**

A voltage compensation system (1, 1a) and an uninterruptible power supply (1, 1a) are provided. The voltage conversion device (3) selectively receives the first AC input source (AC1) or the second AC input source (AC2) through the first switching device (2), and converts the first AC input source (AC1) or the second AC input source (AC2) into a DC voltage (V1). The energy buffering device (8) is connected with the DC busbar (4). The energy buffering device (8) includes a bidirectional voltage conversion device (82) and an energy tank (81). One terminal of the bidirectional voltage conversion device (82) is connected with the DC busbar (4). The energy tank (81) is connected with the other terminal of the bidirectional voltage conversion device (82). During a dead time of the first switching device (2) switching between the first AC input source (AC1) and the second AC input source (AC2), the controller (9) controls the bidirectional voltage conversion device (82), so that the DC voltage (V1) is compensated by the energy tank (81).

## Description

### FIELD OF THE INVENTION

The present disclosure relates to power system and more particularly to a voltage compensation system and an uninterruptible power supply.

### BACKGROUND OF THE INVENTION

The voltage compensation system includes a DC busbar and a converter. The DC busbar selectively receives two AC power sources. The converter converts the selected AC power source into a DC power to provide the load. Each AC power source is connected to the DC busbar through a corresponding relay. When the voltage of one of the two AC power sources is abnormal, the relay connected to the abnormal AC power source is disconnected. The DC busbar is waiting for the normal AC power source. Since the input phases of the two AC power sources are non-simultaneous and the switching time of the relay is increased, the voltage compensation system is prone to loss power. Additionally, while the DC busbar is waiting for the normal AC power source, neither AC power source is providing power. The volume of the capacitor disposed in the DC busbar has to be increased to provide the output voltage. Consequently, the whole volume and the cost of the voltage compensation system are increased.

Therefore, there is a need of providing a voltage compensation system and an uninterruptible power supply to obviate the drawbacks encountered from the prior arts.

### SUMMARY OF THE INVENTION

The object of the present disclosure is to provide a voltage compensation system and an uninterruptible power supply. The voltage compensation system of the present disclosure includes a controller. During the dead time of the first switching device switching between the first AC input source and the second AC input source, the controller controls the bidirectional voltage conversion device of the energy buffering device. The energy tank provides the power to the DC busbar through the bidirectional voltage conversion device, and the DC voltage of the DC busbar is compensated. Consequently, all of the charging voltage stored in the energy tank of the voltage compensation system of the present disclosure is transmitted to the DC busbar through the bidirectional voltage conversion device of the energy buffering device. Dynamic discharging of the voltage compensation system of the present disclosure is enhanced. Consequently, the capacitor volume of the DC busbar of the voltage compensation system of the present disclosure is reduced so as to satisfy the discharging easily. The whole volume and the cost of the voltage compensation system of the present disclosure are reduced.

In accordance with an aspect of the present disclosure, a voltage compensation system is provided. The voltage compensation system includes a first switching device, a voltage conversion device, a DC busbar, an energy buffering device and a controller. The first switching device switches to connect with a first AC input source or a second AC input source. The voltage conversion device selectively receives the first AC input source or the second AC input source through the first switching device, and converts the first AC input source or the second AC input source into a DC voltage. The DC busbar transmits the DC voltage. The energy buffering device is connected with the DC busbar. The energy buffering device includes a bidirectional voltage conversion device and an energy tank. One terminal of the bidirectional voltage conversion device is connected with the DC busbar. The energy tank is connected with the other terminal of the bidirectional voltage conversion device. During a dead time of the first switching device switching between the first AC input source and the second AC input source, the controller controls the bidirectional voltage conversion device, so that the DC voltage of the DC busbar is compensated by the energy tank.

In accordance with another aspect of the present disclosure, an uninterruptible power supply is provided. The uninterruptible power supply includes a first switching element, a second switching element, a power factor correction circuit, an energy buffering device and a controller. The first switching element is electrically connected with a first AC input source. The second switching element is electrically connected with a second AC input source. The power factor correction circuit is electrically connected with the first switching element and the second switching element. The power factor correction circuit receives one of the first AC input source and the second AC input source according to switching between the first switching element and the second switching element, so that an output terminal of the power factor correction circuit includes a DC voltage with a first working voltage. An output terminal of the energy buffering device is electrically connected with the output terminal of the power factor correction circuit. During a dead time of the first switching device switching between the first AC input source and the second AC input source, the controller controls the bidirectional voltage conversion device, so that the DC voltage of the DC busbar is compensated to maintain in a second working voltage.

The above contents of the present disclosure will become more readily apparent to those ordinarily skilled in the art after reviewing the following detailed description and accompanying drawings, in which:

### BRIEF DESCRIPTION OF THE DRAWINGS

FIG. 1A is a schematic circuit diagram illustrating the voltage compensation system according to a first embodiment of the present disclosure;
FIG. 1B is a schematic circuit diagram illustrating the voltage compensation system according to a second embodiment of the present disclosure;
FIG. 2 is a schematic waveform diagram illustrating the voltage of the elements of the voltage compensation system as shown in FIG. 1A;
FIG. 3 is a schematic detail circuit diagram illustrating the bidirectional voltage conversion device of the energy buffering device of the voltage compensation system as shown in FIG. 1A; and
FIG. 4 is a schematic detail circuit diagram illustrating the controller of the voltage compensation system as shown in FIG. 1A.

### DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed.

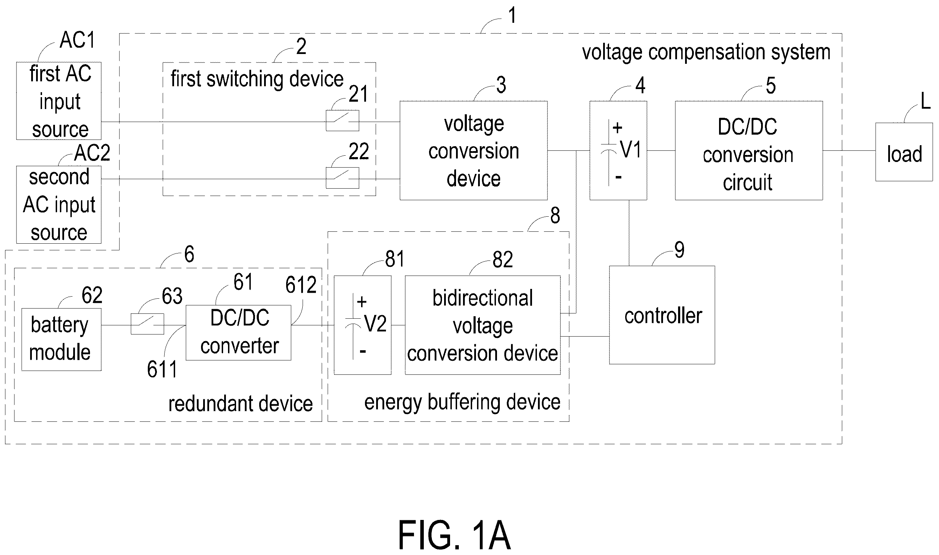

FIG. 1A is a schematic circuit diagram illustrating the voltage compensation system according to a first embodiment of the present disclosure. As shown in FIG. 1A, the voltage compensation system 1 of this embodiment receives and converts a first AC input source AC1 and a second AC input source AC2 to provide the power to the load L. The first AC input source AC1 and the second AC input source AC2 are two different AC input sources. The voltage compensation system 1 includes a first switching device 2, a voltage conversion device 3, a DC busbar 4, a DC/DC conversion circuit 5, a redundant device 6, an energy buffering device 8 and a controller 9.

The first switching device 2 is switched to connect with the first AC input source AC1 and the second AC input source AC2. Namely, the first switching device 2 is selectively connected with the first AC input source AC1 or the second AC input source AC2. When one of the first AC input source AC1 and the second AC input source AC2 is abnormal, a dead time is existed when the first switching device 2 switches between the first AC input source AC1 and the second AC input source AC2. During the dead time, the first switching device 2 cannot transmit the power normally. In this embodiment, the first switching device 2 includes a first switching element 21 and a second switching element 22. The first switching element 21 is connected with the first AC input source AC1. When the first switching element 21 is turned on, the first AC input source AC1 is transmitted through the first switching element 21. The second switching element 22 is connected with the second AC input source AC2. When the second switching element 22 is turned on, the second AC input source AC2 is transmitted through the second switching element 22.

The voltage conversion device 3 is connected with the first switching element 21 and the second switching element 22 of the first switching device 2. The voltage conversion device 3 receives the first AC input source AC1 or the second AC input source AC2 according to the switching state of the first switching element 21 and the second switching element 22 of the first switching device 2. The voltage conversion device 3 converts the first AC input source AC1 or the second AC input source AC2 which is received to a DC voltage V1. The DC busbar 4 receives and transmits the DC voltage V1 provided by the voltage conversion device 3. During the dead time of the first switching device 2 switching between the first AC input source AC1 and the second AC input source AC2, the DC busbar 4 cannot receive the power so as to reduce the DC voltage V1 of the DC busbar 4. The DC/DC conversion circuit 5 is connected between the DC busbar 4 and the load L. The DC/DC conversion circuit 5 converts the DC voltage V1 of the DC busbar 4 to provide the power to the load L.

The redundant device 6 includes a DC/DC converter 61, a battery module 62 and a second switching device 63. The DC/DC converter 61 includes an input terminal 611 and an output terminal 612. The battery module 62 provides a battery voltage to the input terminal 611 of the DC/DC converter 61. The second switching device 63 is connected between the input terminal 611 of the DC/DC converter 61 and the battery module 62. When the first AC input source AC1 and/or the second AC input source AC2 is abnormal, the second switching device 63 is turned on. The DC/DC converter 61 transmits the battery voltage provided by the battery module 62 to a third working voltage.

The energy buffering device 8 is connected between the output terminal 612 of the DC/DC converter 61 and the DC busbar 4. The energy buffering device 8 includes an energy tank 81 and a bidirectional voltage conversion device 82. The energy tank 81 is connected with the output terminal 612 of the DC/DC converter 61 to store the third working voltage provided by the DC/DC converter 61 as a charging voltage V2. During the dead time of the first switching device 2 switching between the first AC input source AC1 and the second AC input source AC2, the energy tank 81 provides the charging voltage V2. The bidirectional voltage conversion device 82 is connected between the energy tank 81 and the DC busbar 4. The bidirectional voltage conversion device 82 selectively transmits the charging voltage V2 stored in the energy tank 81 to the DC busbar 4 or transmits the DC voltage V1 of the DC busbar 4 to the energy tank 81. Namely, the third working voltage is transmitted to the DC busbar 4 through the energy tank 81 and the bidirectional voltage conversion device 82.

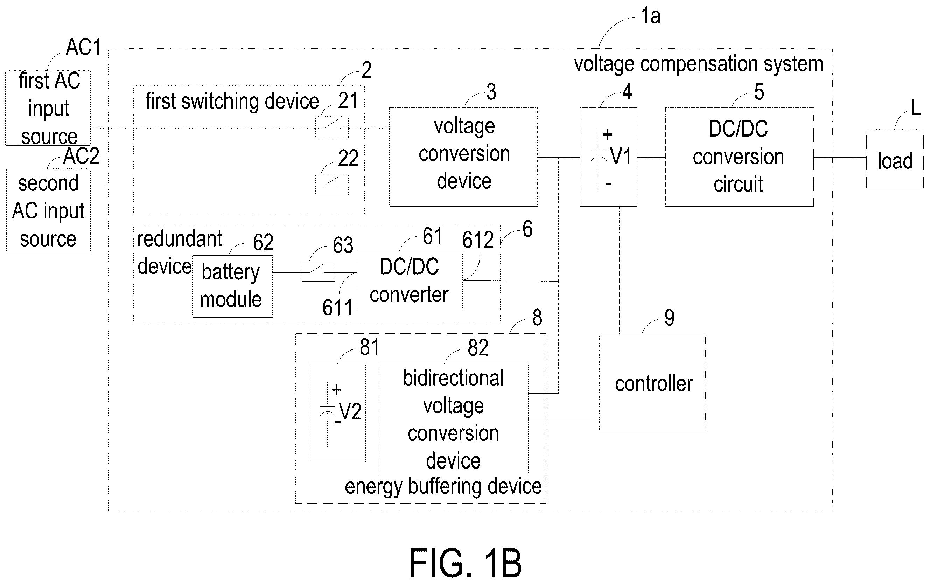

The redundant device 6 of the voltage compensation system 1 of FIG. 1A is connected with the DC busbar 4 through the energy buffering device 8. Compared with the first embodiment, in some embodiments, the redundant device of the voltage compensation system is connected with the DC busbar directly. As shown in FIG. 1B, the redundant device 6 of the voltage compensation system 1a is connected with the DC busbar 4 directly. Namely, the output terminal 612 of the DC/DC converter 61 and the bidirectional voltage conversion device 82 of the energy buffering device 8 are electrically connected with the DC busbar 4 collaboratively. Consequently, the charging voltage V2 provided by the DC/DC converter 61 and the DC voltage V1 of the energy buffering device 8 are provided to the DC busbar 4 collaboratively.

Please refer to FIG. 1A again. The controller 9 controls the bidirectional voltage conversion device 82 according to the DC voltage V1 of the DC busbar 4. When the first AC input source AC1 or the second AC input source AC2 is abnormal and during the dead time of the first switching device 2 switching between the first AC input source AC1 and the second AC input source AC2, the controller 9 determines the DC voltage V1 of the DC busbar 4 dropped from a first working voltage lower than a lower voltage threshold, the controller 9 determines that the DC voltage V1 of the DC busbar 4 is undervoltage. The controller 9 controls the bidirectional voltage conversion device 82, so that the energy tank 81 provides the charging voltage V2 served as a first compensation voltage, and the bidirectional voltage conversion device 82 converts the first compensation voltage into a second compensation voltage to the DC busbar 4. Namely, the energy tank 81 provides the power to the DC busbar 4 through the bidirectional voltage conversion device 82, and the DC voltage V1 of the DC busbar 4 is compensated by the energy tank 81, so that the DC voltage V1 of the DC busbar 4 is recovered to a second working voltage. In an embodiment, the second compensation voltage is adjusted to adjust the second working voltage by the controller 9 according to practical requirement. In an embodiment, the second working voltage is lower than the first working voltage. The energy tank 81 includes a capacitor or any other storage device. While the load L operating normally to maintain the steady state, the energy can be saved, and the charging time of the energy reservoir 81 can be reduced. The energy tank 81 includes a capacitor with reduced capacitance. Consequently, the volume and the cost of the circuit are reduced. In other embodiment, the second working voltage is greater than or equal to the first working voltage to confirm the load L working normally or efficiently.

In an embodiment, when the controller 9 determines that the first AC input source AC1 or the second AC input source AC2 is recovered and the dead time is over, the bidirectional voltage conversion device 82 is operated to enable the voltage conversion device 3 to convert the first AC input source AC1 or the second AC input source AC2 to charge the energy tank 81. In an embodiment, when the controller 9 determines that the energy tank 81 has discharged for a predetermined time, the bidirectional voltage conversion device 82 is operated to enable the voltage conversion device 3 to convert the first AC input source AC1 or the second AC input source AC2 to charge the energy reservoir 81. The predetermined time is greater than the dead time. The dead time (i.e., dead time) by switching the typical power source is either fixed or calculable. Consequently, the discharge time can also be calculated to determine the end time of the dead time.

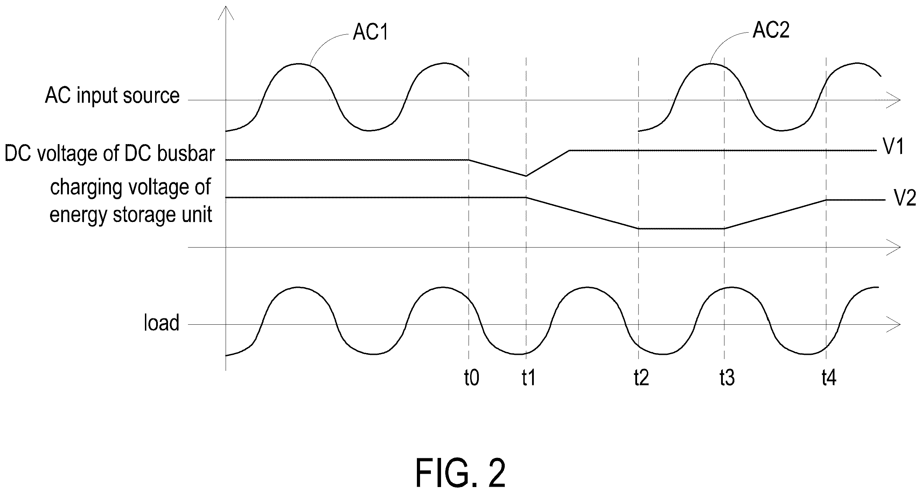

FIG. 2 is a schematic waveform diagram illustrating the voltage of the elements of the voltage compensation system as shown in FIG. 1A. As shown in FIG. 2, the four waveforms from upper to lower are the voltage of the AC input sources (i.e., AC1 and AC2), the voltage of the DC voltage V1 of the DC busbar 4, the voltage of the charging voltage V2 of the energy tank 81 and the voltage of the load L. Before time t0, the first AC input source AC1 is in the steady state, and the DC voltage V1 of the DC busbar 4 and the charging voltage V2 of the energy tank 81 are fixed. Between time t0 and t1 (i.e., the dead time between the power loss of the first AC input source AC1 and the switch to the second AC input source AC2), the DC voltage V1 of the DC busbar 4 is dropped, and the controller 9 determines that the first AC input source AC1 and the second AC input source AC2 are in the dead time. Between time t1 and t2, the controller 9 controls the bidirectional voltage conversion device 82, the bidirectional voltage conversion device 82 provides the power to the DC busbar 4 according to the charging voltage V2 stored in the energy tank 81. The DC voltage V1 of the DC busbar 4 is compensated, and the charging voltage V2 stored in the energy tank 81 is dropped. The DC voltage V1 of the DC busbar 4 is raised to the maximum voltage accommodated by the energy tank 81, then the DC voltage V1 maintains in the steady state. Between time t2 and t3, the dead time is over (i.e., the second AC input source AC2 is recovered), the second AC input source AC2 starts to provide the power. The DC voltage V1 of the DC busbar 4 keeps maintaining in the steady state. The charging voltage V2 stored in the energy tank 81 is fixed. Between time t3 and t4, the DC voltage V1 of the DC busbar 4 restarts to provide the power to the energy tank 81. The charging voltage V2 stored in the energy tank 81 is raised. In every moment, the voltage of the load L is in the steady state.

From above, the voltage compensation system 1 of the present disclosure includes a controller 9. During the dead time of the first switching device 2 switching between the first AC input source AC1 and the second AC input source AC2, the controller 9 controls the bidirectional voltage conversion device 82 of the energy buffering device 8. The energy tank 81 provides the power to the DC busbar 4 through the bidirectional voltage conversion device 82, and the DC voltage V1 of the DC busbar 4 is compensated. Consequently, all of the charging voltage V2 stored in the energy tank 81 of the voltage compensation system 1 of the present disclosure is transmitted to the DC busbar 4 through the bidirectional voltage conversion device 82 of the energy buffering device 8. Dynamic discharging of the voltage compensation system 1 of the present disclosure is enhanced. Consequently, the capacitor volume of the DC busbar 4 of the voltage compensation system 1 of the present disclosure is reduced so as to satisfy the discharging easily. The whole volume and the cost of the voltage compensation system 1 of the present disclosure are reduced.

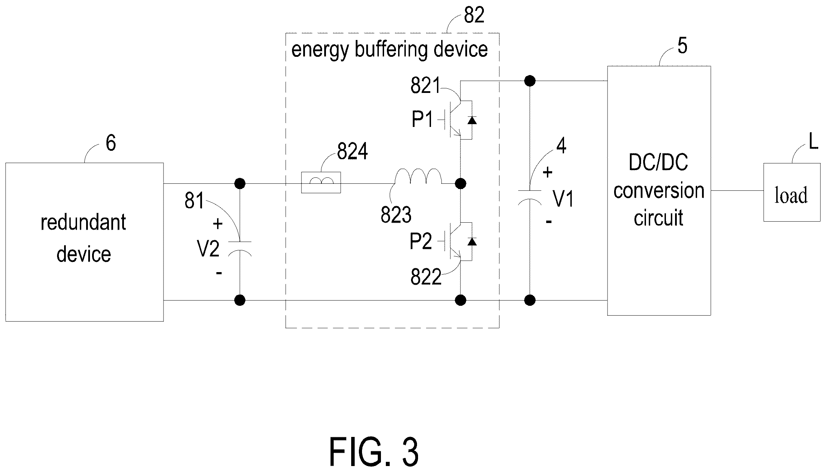

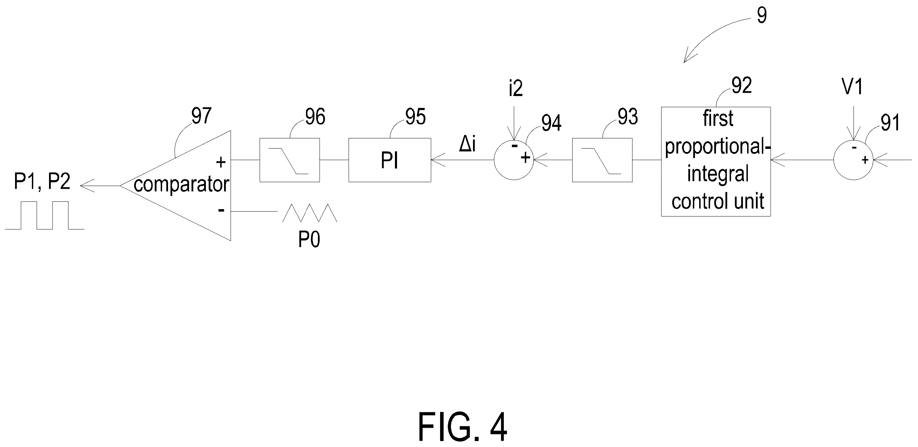

FIG. 3 is a schematic detail circuit diagram illustrating the bidirectional voltage conversion device of the energy buffering device of the voltage compensation system as shown in FIG. 1A. FIG. 4 is a schematic detail circuit diagram illustrating the controller of the voltage compensation system as shown in FIG. 1A. As shown in FIG. 3, the bidirectional voltage conversion device 82 includes a first switch 821, a second switch 822, an inductor 823 and a current detection unit 824. A first terminal of the first switch 821 is electrically connected with the DC busbar 4. A first terminal of the second switch 822 is electrically connected with a second terminal of the first switch 822. A second terminal of the second switch 822 is electrically connected with the DC busbar 4. A first terminal of the inductor 823 is electrically connected with the first terminal of the second switch 822 and the second terminal of the first switch 821. The current detection unit 824 is electrically connected between a second terminal of the inductor 823 and the energy tank 81. A detection current i2 flowing from the energy tank 81 to the bidirectional voltage conversion device 82 is detected by the current detection unit 824, and a first compensation voltage is calculated. As shown in FIGS. 1A and 4, the controller 9 is electrically connected with the DC busbar 4 and the bidirectional voltage conversion device 82 of the energy buffering device 8. The controller 9 includes a first subtractor 91, a first proportional-integral control unit 92, a first limiter 93, a second subtractor 94, a second proportional-integral control unit 95, a second limiter 96 and a comparator 97. The first subtractor 91 subtracts a voltage reference value Vref preset in the controller 9 from the DC voltage V1 of the DC busbar 4 to obtain a voltage difference ΔV. The first proportional-integral control unit 92 adjusts the voltage difference ΔV. The first limiter 93 obtains a first saturation upper limit according to the voltage difference ΔV which is adjusted. The second subtractor 94 subtracts the first saturation upper limit provided by the first limiter 93 from the detection current i2 detected by the current detection unit 824 of the bidirectional voltage conversion device 82 to obtain a current difference ΔI. The second proportional-integral control unit 95 adjusts the current difference ΔI. The second limiter 96 obtains a second saturation upper limit according to the current difference ΔI which is adjusted. The comparator 97 obtains PWM control signals P1 and P2 according to the comparison result between the second saturation upper limit and an original control signal P0 preset in the controller 9. The duty cycle of the PWM control signals P1 and P2 are raised to the maximum value so as to control the bidirectional voltage conversion device 82. For example, the PWM control signals P1 and P2 controls the first switch 821 and the second switch 822 of the bidirectional voltage conversion device 82, respectively. The charging voltage V2 stored in the energy tank 81 is transmitted to the DC busbar 4 through the bidirectional voltage conversion device 82 so as to adjust the second compensating voltage for compensating the DC voltage V1 of the DC busbar 4. The DC voltage V1 of the DC busbar 4 is greater than the charging voltage V2 stored in the energy tank 81. In an embodiment, the voltage reference value Vref of the controller 9 is adjustable. For example, the voltage reference value Vref is a voltage reference base value plus a voltage adjustment value. Consequently, the controller 9 adjusts the voltage adjustment value according to the power required by the DC voltage V1 of the DC busbar 4.

In an embodiment, the voltage conversion device of the voltage compensation system can be replaced by a power factor correction circuit. The first switching element and the second switching element of the first switching device, the power factor correction circuit, the DC busbar, the DC/DC conversion circuit, the redundant device, the energy buffering device and the controller are served as an uninterruptible power supply. Similarly, during the dead time of the first switching device switching between the first AC input source and the second AC input source, the controller of the uninterruptible power supply enables the energy buffering device to compensate the DC voltage to maintain in the second working voltage.

As mentioned above, the voltage compensation system of the present disclosure includes a controller. During the dead time of the first switching device switching between the first AC input source and the second AC input source, the controller controls the bidirectional voltage conversion device of the energy buffering device. The energy tank provides the power to the DC busbar through the bidirectional voltage conversion device, and the DC voltage of the DC busbar is compensated. Consequently, all of the charging voltage stored in the energy tank of the voltage compensation system of the present disclosure is transmitted to the DC busbar through the bidirectional voltage conversion device of the energy buffering device. Dynamic discharging of the voltage compensation system of the present disclosure is enhanced. Consequently, the capacitor volume of the DC busbar of the voltage compensation system of the present disclosure is reduced so as to satisfy the discharging easily. The whole volume and the cost of the voltage compensation system of the present disclosure are reduced.

## Claims

1. A voltage compensation system (1, 1a), **characterized by** comprising:
a first switching device (2) switching to connect with a first AC input source (AC1) or a second AC input source (AC2);
a voltage conversion device (3) selectively receiving the first AC input source (AC1) or the second AC input source (AC2) through the first switching device (2), and converting the first AC input source (AC1) or the second AC input source (AC2) into a DC voltage (V1);
a DC busbar (4) transmitting the DC voltage (V1);
an energy buffering device (8) connected with the DC busbar (4), and comprising:
a bidirectional voltage conversion device (82), wherein one terminal of the bidirectional voltage conversion device (82) is connected with the DC busbar (4); and
an energy tank (81) connected with the other terminal of the bidirectional voltage conversion device (82); and
a controller (9), wherein during a dead time of the first switching device (2) switching between the first AC input source (AC1) and the second AC input source (AC2), the controller (9) controls the bidirectional voltage conversion device (82), so that the DC voltage (V1) of the DC busbar (4) is compensated by the energy tank (81).

2. The voltage compensation system (1, 1a) according to claim 1, wherein the controller (9) determines the DC voltage (V1) of the DC busbar (4) dropped from a first working voltage lower than a lower voltage threshold during the dead time, and the controller (9) determines that the DC voltage (V1) of the DC busbar (4) is undervoltage.

3. The voltage compensation system (1, 1a) according to claim 2, wherein the energy tank (81) provides a first compensation voltage after the controller (9) determines that the DC voltage (V1) of the DC busbar (4) is the undervoltage, the bidirectional voltage conversion device (82) converts the first compensation voltage into a second compensation voltage to the DC busbar (4), so that the DC voltage (V1) is recovered to a second working voltage.

4. The voltage compensation system (1, 1a) according to claim 3, wherein the second working voltage is lower than the first working voltage, or the second working voltage is greater than or equal to the first working voltage.

5. The voltage compensation system (1, 1a) according to claim 1, wherein the voltage compensation system (1, 1a) further comprises a redundant device (6), the redundant device (6) comprises:
a DC/DC converter (61) comprising an output terminal (612);
a battery module (62) providing a battery voltage to an input terminal (611) of the DC/DC converter (61); and
a second switching device (63) disposed between the DC/DC converter (61) and the battery module (62);
wherein when the first AC input source (AC1) and/or the second AC input source (AC2) is abnormal, the second switching device (63) is enabled, the DC/DC converter (61) converts the battery voltage into a third working voltage, and the third working voltage is outputted to the DC busbar (4).

6. The voltage compensation system (1) according to claim 5, wherein the output terminal (612) of the DC/DC converter (61) is electrically connected with the energy tank (81), and the third working voltage is transmitted to the DC busbar (4) through the energy tank (81) and the bidirectional voltage conversion device (82).

7. The voltage compensation system (1a) according to claim 5, wherein the output terminal (612) of the DC/DC converter (61) and an output terminal of the bidirectional voltage conversion device (82) are electrically connected with the DC busbar (4) collaboratively.

8. The voltage compensation system (1, 1a) according to claim 1, wherein the bidirectional voltage conversion device (82) comprises:
a first switch (821), wherein a first terminal of the first switch (821) is electrically connected with the DC busbar (4);
a second switch (822), wherein a first terminal of the second switch (822) is electrically connected with a second terminal of the first switch (821), and a second terminal of the second switch (822) is electrically connected with the DC busbar (4);
an inductor (823), wherein a first terminal of the inductor (823) is electrically connected with the first terminal of the second switch (822) and the second terminal of the first switch (821); and
a current detection unit (824) connected between a second terminal of the inductor (823) and the energy tank (81), wherein the current detection unit (824) detects a current flowing from the energy tank (81) to the bidirectional voltage conversion device (82), and a first compensation voltage is calculated.

9. The voltage compensation system (1, 1a) according to claim 8, wherein the controller (9) comprises a first subtractor (91), a first proportional-integral control unit (92), a first limiter (93), a second subtractor (94), a second proportional-integral control unit (95), a second limiter (96) and a comparator (97), the first subtractor (91) subtracts a voltage reference value (Vref) from the DC voltage (V1) of the DC busbar (4) to obtain a voltage difference (ΔV), the first proportional-integral control unit (92) adjusts the voltage difference (ΔV), the first limiter (93) obtains a first saturation upper limit according to the voltage difference (ΔV) which is adjusted, the second subtractor (94) subtracts the first saturation upper limit from the detection current detected by the current detection unit (824) to obtain a current difference (ΔI), the second proportional-integral control unit (95) adjusts the current difference (ΔI), the second limiter (96) obtains a second saturation upper limit according to the current difference (ΔI) which is adjusted, the comparator (97) obtains a PWM control signal (P1, P2) according to a comparison result between the second saturation upper limit and an original control signal (P0) for controlling the first switch (821) and the second switch (822) and adjusting a second compensation voltage.

10. An uninterruptible power supply (1, 1a), **characterized by** comprising:
a first switching element (21) and a second switching element (22), wherein the first switching element (21) is electrically connected with a first AC input source (AC1), and the second switching element (22) is electrically connected with a second AC input source (AC2);
a power factor correction circuit electrically connected with the first switching element (21) and the second switching element (22), wherein the power factor correction circuit receives one of the first AC input source (AC1) and the second AC input source (AC2) according to switching between the first switching element (21) and the second switching element (22), so that an output terminal of the power factor correction circuit includes a DC voltage (V1) with a first working voltage;
an energy buffering device (8), wherein an output terminal of the energy buffering device (8) is electrically connected with the output terminal of the power factor correction circuit; and
a controller (9), wherein during a dead time of the first switching device (2) switching between the first AC input source (AC1) and the second AC input source (AC2), the controller (9) controls the bidirectional voltage conversion device (82), so that the DC voltage (V1) of the DC busbar (4) is compensated to maintain in a second working voltage.

11. The uninterruptible power supply (1, 1a) according to claim 10, wherein the controller (9) determines the DC voltage (V1) dropped from the first working voltage lower than a lower voltage threshold during the dead time, and the controller (9) determines that the DC voltage (V1) of the DC busbar (4) is undervoltage and enables the energy buffering device (8).

12. The uninterruptible power supply (1, 1a) according to claim 10, wherein the second working voltage is lower than the first working voltage, or the second working voltage is greater than or equal to the first working voltage.

13. The uninterruptible power supply (1, 1a) according to claim 10, wherein the energy buffering device (8) comprises:
a bidirectional voltage conversion device (82), wherein an output terminal of the bidirectional voltage conversion device (82) is served as the output terminal of the energy buffering device (8) to electrically connect with the output terminal of the power factor correction circuit; and
an energy tank (81) connected with an input terminal of the bidirectional voltage conversion device (82);
wherein when the controller (9) enables the energy buffering device (8), the bidirectional voltage conversion device (82) is controlled, so that the DC voltage (V1) is compensated by the energy tank (81).

14. The uninterruptible power supply (1, 1a) according to claim 13, wherein when the controller (9) determines that the first AC input source (AC1) or the second AC input source (AC2) is recovered, the bidirectional voltage conversion device (82) is operated to enable the power factor correction circuit to convert the first AC input source (AC1) or the second AC input source (AC2) to charge the energy tank (81).

15. The uninterruptible power supply (1, 1a) according to claim 13, wherein when the controller (9) determines that the energy tank (81) has discharged for a predetermined time, the bidirectional voltage conversion device (82) is operated to enable the voltage conversion device (3) to convert the first AC input source (AC1) or the second AC input source (AC2) to charge the energy reservoir, and the predetermined time is greater than the dead time.
